# EUROPÄISCHE PATENTANMELDUNG

(11) **EP 1 500 423 A1**
(43) Veröffentlichungstag der Anmeldung: **26.01.2005**
(21) Anmeldenummer: 04103476.0
(22) Anmeldetag: 21.07.2004
(51) Int. Cl.: B01D 45/12, B04C 3/04

(54) **Filterzusammenbau des Wirbeltyps**

(30) Priorität: 24.07.2003 US 627321
(71) Anmelder: DEERE & COMPANY, Moline, Illinois 61265-8098 (US)
(72) Erfinder: Sheidler, Alan David, Moline, IL 61265 (US); Lovett, Benjamin Max, Rock Island, IL 61201 (US); Park, Yong Ho, East Moline, IL 61244 (US)
(74) Vertreter: Holst, Sönke, Dr.

(57) **Zusammenfassung**

Die Erfindung betrifft einen Filterzusammenbau (10, 10') des Wirbeltyps, mit einem Gehäuse (12, 12'), das einen Einlassbereich (14), eine Filterkammer (18, 18') stromab des Einlassbereichs (14) und einen Auslassbereich (16) stromab der Filterkammer (18, 18') aufweist, wobei sich im Gehäuse (12, 12') mindestens ein Einlassdurchlass (24), durch den ein Fluid aus dem Einlassbereich (14) strömt, in welchem Wirbel erzeugt werden und ein Auslassdurchlass (26) befinden, durch den das Fluid zum Auslassbereich (16) strömt, und wobei der Einlassdurchlass (24) mit dem Auslassdurchlass (26) zusammenwirkt, um Verunreinigungen aus dem Fluid zu filtern.

Es wird vorgeschlagen, dass innerhalb des Gehäuses (12, 12') ein herausnehmbares Einlassmodul (50, 50') mit dem Einlassdurchlass (24) und ein herausnehmbares Auslassmodul (52, 52') mit dem Auslassdurchlass (26) angeordnet sind.

## Beschreibung

Die Erfindung betrifft einen Filterzusammenbau des Wirbeltyps, mit einem Gehäuse, das einen Einlassbereich, eine Filterkammer stromab des Einlassbereichs und einen Auslassbereich stromab der Filterkammer aufweist, wobei sich im Gehäuse mindestens ein Einlassdurchlass, durch den ein Fluid aus dem Einlassbereich strömt, in welchem Wirbel erzeugt werden und ein Auslassdurchlass befinden, durch den das Fluid zum Auslassbereich strömt, und wobei der Einlassdurchlass mit dem Auslassdurchlass zusammenwirkt, um Verunreinigungen aus dem Fluid zu filtern.

Filter des Wirbeltyps sind wohlbekannt und werden umfangreich zum Filtern von fließfähigen Medien, einschließlich Flüssigkeiten und Gasen verwendet. Diese Filter sind vorteilhaft, da sie eine hohe Trenneffizienz bei minimalen Pumpverlusten bereitstellen. Filter des Wirbeltyps können in einer Vielzahl von Anwendungen verwendet werden, wie zum Trennen von Verunreinigungen aus Flüssigkeiten, zum Trennen schwererer Flüssigkeiten aus leichteren Flüssigkeiten, zum Trennen von Partikeln aus Gasen oder zum Trennen von Flüssigkeiten aus gasförmigen Fluiden.

Ein Filter des Wirbeltyps umfasst im Wesentlichen einen Wirbel erzeugenden Eingangsdurchlass und einen damit zusammenwirkenden Auslassdurchlass. Beide Durchlässe können zylindrisch oder leicht konisch sein und sind axial miteinander ausgerichtet. Der Einlass des Auslassdurchlasses ist kleiner als der Auslass des Einlassdurchlasses und nahe des Auslasses des Einlassdurchlasses angeordnet. Die Durchlässe erstrecken sich in eine Filterkammer, die von dem Einlass des Einlassdurchlasses und dem Auslass des Auslassdurchlasses getrennt ist. Aus dieser Filterkammer wird das abgeschiedene Material durch eine externe Quelle durch einen Ansauganschluss oder einen Abführanschluss gezogen. Derartige Filter sind typischer Weise innerhalb eines Gehäuses angeordnet, entweder allein oder in Gruppen, um einen Filterzusammenbau zu bilden, der zur Filterung von Fluiden in Maschinen oder Motoren verwendet werden kann.

Beim Betrieb tritt ungefiltertes Fluid in den Einlassdurchlass ein, wo eine Wirbelbewegung auf den Fluss des Fluids übertragen wird. Das schwerere Material im Fluss, sei es Fluid oder Verunreinigung, wird durch die Zentrifugalkraft der Wirbelbewegung radial nach außen an die Wände des Einlassdurchlasses geworfen. Der Fluss wird somit in einen leichteren Teil in der Mitte des Einlassdurchlasses und einen schwereren Teil nahe der Wand des Einlassdurchlasses aufgeteilt. Wenn das Fluid den Einlassdurchlass verlässt, fließt der schwerere getrennte Anteil am Einlass des kleineren Auslassdurchlasses vorbei und in die Filterkammer, während der leichtere, gefilterte Anteil in und durch den Auslassdurchlass fließt.

Bei einer Anwendung beispielsweise in einem Arbeitsfahrzeug werden Filterzusammenbauten mit vielen Filtern des Wirbeltyps allgemein verwendet, um Verunreinigungen aus der Luft vorzufiltern, die in den Filter des Motors eintritt. Ein Beispiel einer derartigen Anwendung findet sich in einer landwirtschaftlichen Erntemaschine, bei der die Umgebungsluft hohe Anteile an Staub und Pflanzenmaterial enthalten kann, die von der Erntemaschine erzeugt werden. Bei diesem Beispiel wird Luft durch die Saugwirkung des Motors in die Einlassdurchlässe gezogen. Die schwereren Stäube und Pflanzenmaterialien werden abgetrennt und fließen in die Filterkammer des Filterzusammenbaus, während saubere Luft durch die Auslassdurchlässe weiter zum Motor hin strömt. Das abgetrennte Material wird dann durch den Absauganschluss aus der Filterkammer des Filterzusammenbaus entfernt und in den Ausstoßfluss des Motors eingebracht.

Bei dem beschriebenen Absaugverfahren ist die Filterkammer des Filterzusammenbaus kontinuierlich selbstreinigend. Der typische Filterzusammenbau des Wirbeltyps ist als solcher eine abgedichtete Einheit und ermöglicht keine manuelle Reinigung. Wenn das Absaugverfahren somit ineffektiv wird und die Filterkammer oder die Durchlässe selbst mit abgetrenntem Material verstopft werden, muss der Filterzusammenbau ersetzt werden. Ein Ersatz des Filterzusammenbaus wird normalerweise selten verlangt. Unter bestimmten Betriebsbedingungen, wie bei einer landwirtschaftlichen Erntemaschine, insbesondere bei der Ernte von Saflor (Carthamus tinctorius L.), sind sowohl die Durchlässe als auch die Filterkammer einer hohen Gefahr der Verstopfung mit Pflanzenmaterial ausgesetzt, und ein Austausch des Filterzusammenbaus kann öfter erforderlich werden. Die hohen Kosten und die Länge des Betriebsausfalls, die durch häufige Filterwechsel bedingt werden, sind nicht wünschenswert.

Die der Erfindung zu Grunde liegende Aufgabe wird darin gesehen, die erwähnten Nachteile zu überwinden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein Filterzusammenbau des Wirbeltyps mit zur Wartung herausnehmbaren Einlass- und Auslassmodulen vorgeschlagen. Der Filterzusammenbau weist ein Gehäuse mit einem Einlassbereich, einem Auslassbereich und einer Filterkammer auf. Außerdem ist am Gehäuse in der Nähe der Filterkammer ein Absauganschluss vorgesehen. Innerhalb des Gehäuses sind ein oder mehrere Filter des Wirbeltyps angeordnet, die sich in Längsrichtung der Filterkammer erstrecken. Die Filter sind in herausnehmbaren Modulen angeordnet: Ein Einlassmodul, das den Einlassbereich von der Filterkammer trennt und die Einlassdurchlässe umfasst, und ein Auslassmodul, das die Filterkammer vom Auslassbereich trennt und die Auslassdurchlässe umfasst.

Auf diese Weise kann ein Bediener eines oder beide der Module schnell zur Wartung untersuchen und entnehmen. Außerdem kann die Wartung ohne Verwendung spezieller Werkzeuge durchgeführt werden, während der Filterzusammenbau in seiner Betriebsumgebung verbleibt. Dieser Filterzusammenbau kann insbesondere an Arbeitsmaschinen, wie selbstfahrenden Erntemaschinen, verwendet werden.

In einer ersten Ausführungsform sind die Module durch einen Flansch befestigt, der ein Einlassrohr mit dem Filterzusammenbau ausrichtet. Wenn der Flansch entfernt wird, sind die Module durch den Einlassbereich des Filtergehäuses entnehmbar.

Bei einer zweiten Ausführungsform sind die Module innerhalb des Gehäuses durch einen Zugangsdeckel fixiert, nach dessen Abnehmen die Module ebenfalls zur Wartung entnommen werden. Wenn er geschlossen ist, sichert der Zugangsdeckel das Einlassmodul und das Auslassmodul innerhalb des Gehäuses.

In den Zeichnungen sind zwei nachfolgend näher beschriebene Ausführungsbeispiele der Erfindung dargestellt. Es zeigt:
- Fig. 1: eine Seitenansicht eines erfindungsgemäßen Filterzusammenbaus,
- Fig. 2: eine perspektivische Schnittansicht, in der eine erste Ausführungsform eines erfindungsgemäßen Filterzusammenbaus dargestellt ist,
- Fig. 3: eine perspektivische Ansicht der ersten Ausführungsform der Erfindung, in der das Einlassmodul und das Auslassmodul zur Wartung entfernt wurden,
- Fig. 4: eine perspektivische Schnittansicht, in der eine zweite Ausführungsform eines erfindungsgemäßen Filterzusammenbaus dargestellt ist, und
- Fig. 5: eine perspektivische Ansicht der zweiten Ausführungsform der Erfindung, in der das Einlassmodul und das Auslassmodul zur Wartung entfernt wurden.

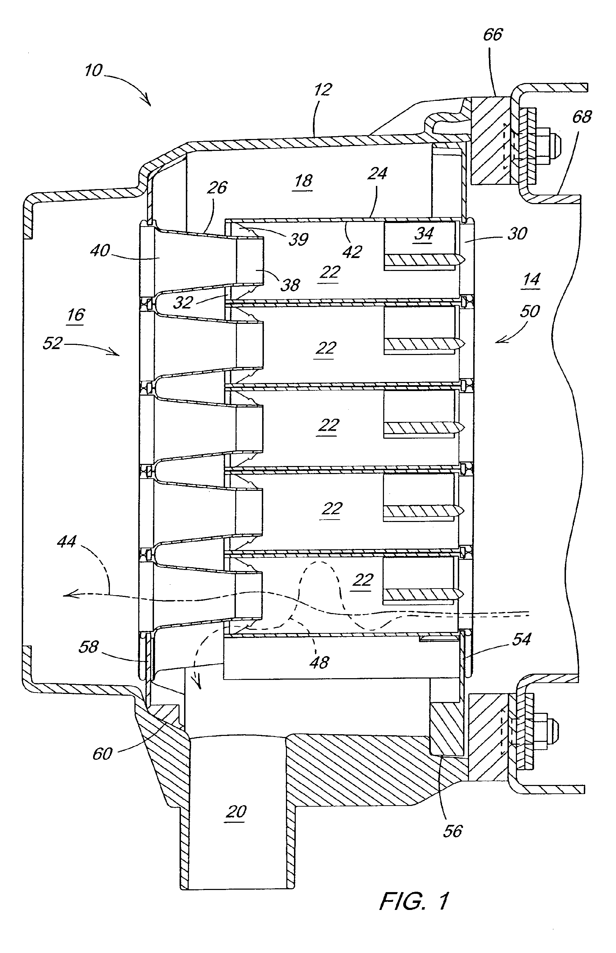

Die Figur 1 zeigt eine erste Ausführungsform der Erfindung, einen Filterzusammenbau 10 des Wirbeltyps mit entfernbaren Modulen 50 und 52. Der Filterzusammenbau 10 umfasst ein rechtwinkliges Gehäuse 12 mit einem Einlassbereich 14, einem Auslassbereich 16 und einer Filterkammer 18. Nahe der Filterkammer 18 erstreckt sich von dem Gehäuse 12 ein Absauganschluss 20. Ungefiltertes Fluid tritt am Einlassbereich 14 in den Filterzusammenbau 10 ein. Gefiltertes Fluid wird am Auslassbereich 16 aus dem Filterzusammenbau 10 abgegeben, während Fluid, das abgetrenntes Material enthält, am Absauganschluss 20 aus dem Filterzusammenbau 10 abgesogen wird. Die Komponenten des Filterzusammenbaus 10 können aus einer Vielzahl geeigneter Materialien geformt sein, einschließlich Stahl, Aluminium oder technischem Kunststoff. Obwohl der Filterzusammenbau 10 rechtwinklig dargestellt ist, könnte auch eine zylindrische oder beliebige andere Form verwendet werden.

Innerhalb des Gehäuses 12 sind mehrere Filter 22 des Wirbeltyps angeordnet, die sich axial innerhalb der Filterkammer 18 erstrecken. Jeder Filter 22 umfasst einen wirbelerzeugenden Einlassdurchlass 24 und einen damit zusammenwirkenden Auslassdurchlass 26. Der Einlassdurchlass 24 ist eine zylindrische Leitung mit einem zum Einlassbereich 14 geöffneten Einlass 30, einem zur Filterkammer 18 offenen Auslass 32 und einer Durchlasswand 42. Innerhalb des Einlassdurchlasses 24 befindet sich ein Wirbel erzeugendes Kufenelement 34, das nahe des Einlasses 30 angeordnet ist. Der Auslassdurchlass 26 ist eine kegelstumpfförmige Leitung mit einem zur Filterkammer 18 offenen Einlass 38, die sich nach außen zu einem Auslass 40 verengt und zum Auslassbereich 16 offen ist. Der Einlass 38 des Auslassdurchlasses 26 ist kleiner als der Auslass 32 des Einlassdurchlasses 24. Zusammenwirkende Einlassdurchlässe 24 und Auslassdurchlässe 26 sind axial miteinander ausgerichtet, wobei sich der Einlass 38 jedes Auslassdurchlasses 26 in den Auslass 32 jedes zugehörigen Einlassdurchlass 24 erstreckt. In der dargestellten Ausführungsform wirken am Einlass 38 des Auslassdurchlasses 26 angeordnete Ausrichtungselemente 39 mit der Durchlasswand 42 des Einlassdurchlasses 24 zusammen, um die axiale Ausrichtung zwischen jedem zusammengehörenden Einlassdurchlass 24 und Auslassdurchlass 26 aufrecht zu erhalten.

Beim Betrieb tritt ungefiltertes Fluid in die Einlassdurchlässe 24 ein, in denen eine Wirbelbewegung auf den Fluss des Fluids übertragen wird. Schwereres Material in dem Fluss, wie beispielsweise Staub oder Verunreinigungen, wird durch die Zentrifugalkraft der Wirbelbewegung radial nach außen zu den Durchlasswänden 42 geworfen. Im Ergebnis ist der Fluss in jedem Einlassdurchlass 24 in einen leichteren Teil 44 in der Mitte des Einlassdurchlasses 24 und einen schwereren Teil 48 nahe der Durchlasswand 42 des Einlassdurchlasses 24 aufgeteilt. Wenn das Fluid den Einlassdurchlass 24 verlässt, fließt der schwerere abgetrennte Teil 48 des Flusses am Einlass 38 des kleineren Auslassdurchlasses 26 vorbei in die Filterkammer 18, während der leichtere, gefilterte Teil 44 in den Auslassdurchlass 26 und durch diesen hindurch strömt. Der abgetrennte Fluss verteilt sich innerhalb der Filterkammer 18 und gelangt in den Absauganschluss 20.

Unter typischen Arbeitsbedingungen kann sich einiges des im abgetrennten Fluss verteilten Materials herauslösen, wenn sich der Fluss innerhalb der Filterkammer 18 verteilt. Mit der Zeit könnte sich dieses Material innerhalb der Filterkammer 18 ansammeln, so dass es dahin tendiert, den Fluss durch die Filterkammer 18 zu behindern und die Effektivität des Filterzusammenbaus 10 zu reduzieren. Bei Betriebsbedingungen, in denen das ungefilterte Fluid mit derartigem Material beaufschlagt ist, kann die Ansammlung schnell erfolgen, was einen häufigen Wechsel des Filterzusammenbaus 10 verlangt. Bei extremen Bedingungen kann der Einlassdurchlass 24 mit derartigem Material verstopfen, was eine weitgehende Einschränkung des Flusses durch den Filterzusammenbau 10 bedingt und sehr häufige Wechsel des Filterzusammenbaus 10 erfordert.

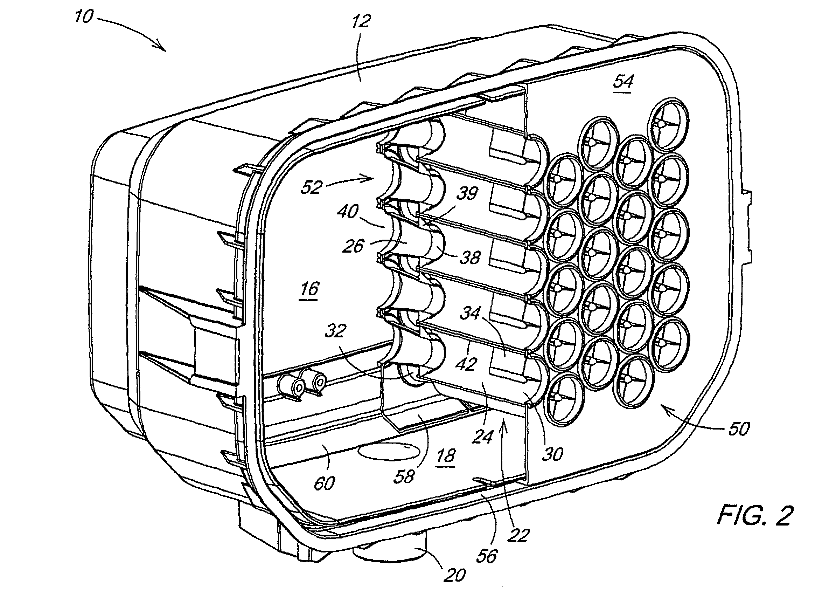

Die Figur 2 zeigt eine perspektivische Ansicht einer ersten dargestellten Ausführungsform, in der die Filter 22 als zwei entnehmbare Module angeordnet sind: ein Einlassmodul 50, das den Einlassbereich 14 von der Filterkammer 18 trennt und die Einlassdurchlässe 24 beinhaltet, und ein Auslassmodul 52, das die Filterkammer 18 vom Auslassbereich 16 trennt und die Auslassdurchlässe 26 beinhaltet. In der dargestellten Ausführungsform ist das Einlassmodul 50 durch eine Platte 54 gebildet, an der die Einlassdurchlässe 24 angebracht sind. Die Platte 54 dichtet den Einlassbereich 14 gegenüber der Filterkammer 18 ab und ist innerhalb des Gehäuses 12 durch Halteund Orientierungselemente 56 positioniert. Analog ist das Auslassmodul 52 aus einer Platte 58 gebildet, an der die Auslassdurchlässe 26 angebracht sind. Die Platte 58 dichtet die Filterkammer 18 gegenüber dem Auslassbereich 16 ab und ist innerhalb des Gehäuses durch Halte- und Orientierungselemente 60 positioniert. Es ist anzumerken, dass die Halte- und Orientierungselemente 56 und 60 dazu dienen, die richtige Ausrichtung zwischen den Einlassdurchlässen 24 des Einlassmoduls 50 und den entsprechenden Auslassdurchlässen 26 des Auslassmoduls 52 in der Längsrichtung sicherzustellen.

In der ersten dargestellten Ausführungsform sind Einschnappelemente 61 vorgesehen, um das Auslassmodul 52 innerhalb des Gehäuses 12 zu sichern. Das Einlassmodul 590 ist innerhalb des Gehäuses 12 durch einen Flansch 66 gesichert, der ein Einlassrohr 68 am Filterzusammenbau 10 ausrichtet. In dieser Ausführungsform ist der Flansch 66 durch einen oder mehrere Endlagensperrriegel 70 befestigt, er könnte aber auch durch andere Mittel, wie Befestigungselemente oder Klammern befestigt werden. Es ist außerdem anzumerken, dass in der dargestellten Ausführungsform, in der Endlagensperrriegel 70 verwendet werden, das Einlassmodul 50 und das Auslassmodul 52 ohne Verwendung spezieller Werkzeuge zur Wartung entnommen werden können. Es ist auch anzumerken, dass diese Anordnung alternativ auch mit einem Auslassmodul 52 ausgeführt werden könnte, das durch einen eine Verbindung mit einem Auslassrohr herstellenden Flansch festgehalten wird, oder mit einem Einlassmodul 50, das durch Einschnappelemente am Gehäuse 12 gehalten wird.

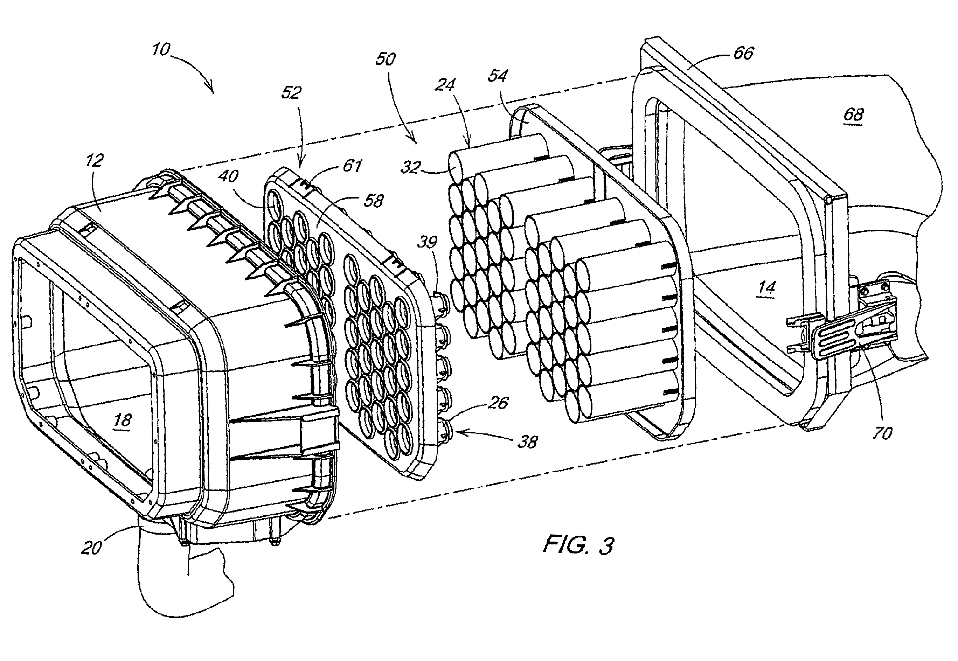

Die Figur 3 zeigt eine perspektivische Ansicht der ersten Ausführungsform, bei der das Einlassmodul 50 und das Auslassmodul 52 zur Wartung entfernt wurden. Zur Wartung muss der Bediener zunächst den Betrieb des Filterzusammenbaus 10 beenden. Sobald der Betrieb unterbrochen ist und sicher weiter vorgegangen werden kann, kann der Bediener den Filterzusammenbau 10 warten, indem er die Endlagensperrriegel 70 entriegelt und den Flansch 66 des Einlassrohrs 68 vom Filterzusammenbau 10 trennt, um das Einlassmodul 50 offenzulegen. Danach kann der Bediener das Einlassmodul 50 entfernen, indem er es vom Gehäuse 12 abzieht, um die Filterkammer 18 offenzulegen. Wenn der Bediener feststellt, dass eine Reinigung der Filterkammer 18 oder der Module 50 und/oder 52 erforderlich ist, kann er unterschiedliche Reinigungsverfahren anwenden, um Verunreinigungen zu entfernen, beispielsweise, indem er die Module 50, 52 und die Filterkammer 18 abwischt, die Module 50 und/oder 52 schüttelt, oder die Module 50, 52 und die Filterkammer 18 mit Druckluft sauber bläst. Es ist bemerkenswert, dass das Auslassmodul 52 zur Reinigung nicht aus dem Gehäuse 12 zu entfernen ist, obwohl es daraus entnehmbar ist. Auf diese Weise bleibt der Auslassbereich 16, der normalerweise im Wesentlichen sauber bleibt, während der Wartung unbeeinträchtigt, so dass das Risiko einer Einschleppung von Verunreinigungen stromab des Filterzusammenbaus 10 minimiert ist.

Sobald die Module 50, 52 und die Filterkammer 18 gereinigt sind, kann der Bediener das Einlassmodul 50 wieder in den Filterzusammenbau 10 einführen. In der dargestellten Ausführungsform dient die Form des Gehäuses 12 den Halte- und Orientierungselementen 56 zur Positionierung des Einlassmoduls 50 innerhalb des Gehäuses 12, wobei nur eine mögliche Anordnung beim Einbau vorliegt. Sobald das Einlassmodul 50 an Ort und Stelle ist, bringt der Bediener den Flansch 66 des Einlassrohrs 68 mit dem Filterzusammenbau 10 zur Deckung und verriegelt sie durch die Endsperrriegel 70 aneinander, wobei das Einlassmodul 50 innerhalb des Filtergehäuses 12 arretiert wird. Sobald der Wiederzusammenbau beendet ist, kann der Bediener den Betrieb wieder aufnehmen.

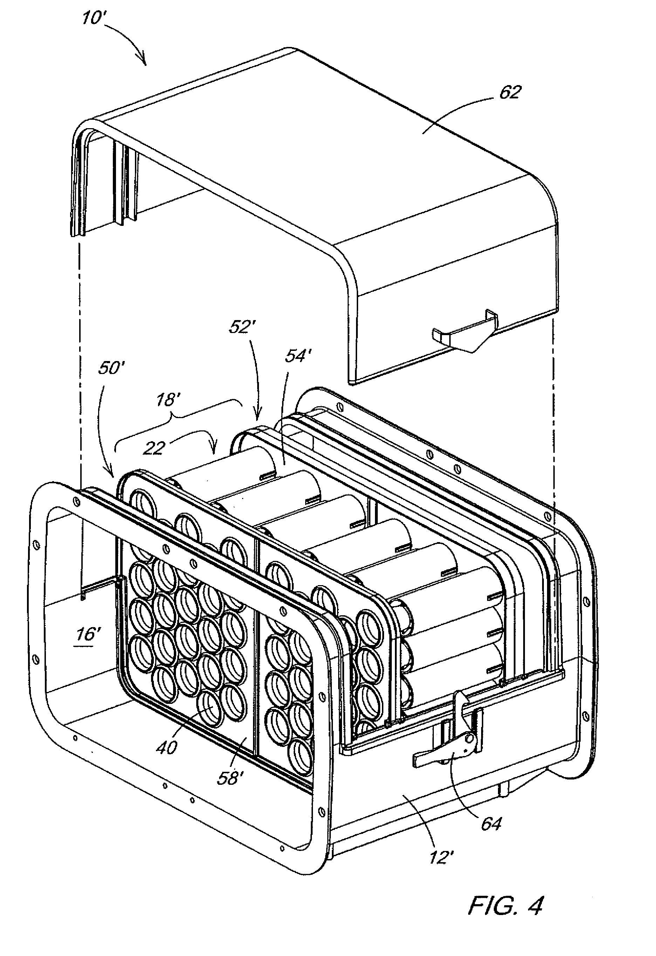

Die Figur 4 zeigt eine perspektivische Ansicht einer zweiten dargestellten Ausführungsform eines Filterzusammenbaus 10' mit einem Gehäuse 12' und einer Filterkammer 18'. Ein Einlassmodul 50' und ein Auslassmodul 52' sind innerhalb des Gehäuses 12' durch einen Zugangsdeckel 62 festgehalten, durch die die Module 50' und 52' auch zur Wartung entfernt werden. In der dargestellten Ausführungsform ist der Zugangsdeckel 62 mit einem oder mehreren Endlagensperrriegeln 64 abnehmbar am Gehäuse 12' angebracht. Wenn sie geschlossen sind, sichert der Zugangsdeckel 62 das Einlassmodul 50' und das Auslassmodul 52' innerhalb des Gehäuses 12'. Bei dieser Anordnung kann ein Bediener ohne Verwendung spezieller Werkzeuge die Module 50' und 52' schnell aus dem Gehäuse 12 entnehmen und inspizieren, während sie in ihrer Arbeitsumgebung verbleiben, ohne jegliche mit dem Filterzusammenbau 10' verbundene Rohrverbindungen abnehmen zu müssen.

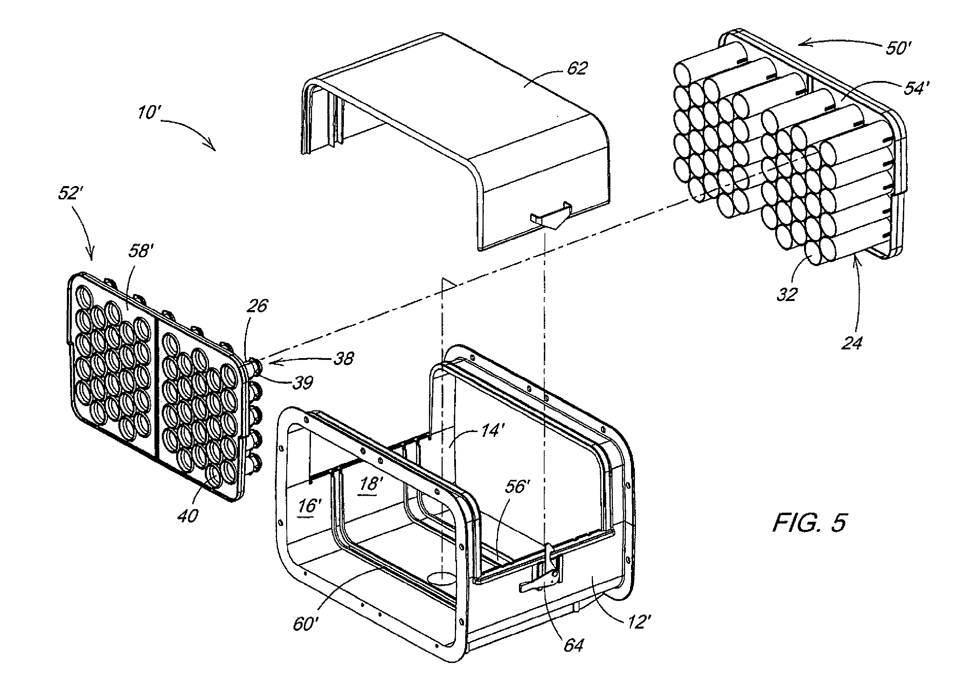

Die Figur 5 zeigt eine perspektivische Ansicht der zweiten dargestellten Ausführungsform, wobei das Einlassmodul 50' und das Auslassmodul 52' zur Wartung entnommen wurden. Zur Wartung muss der Bediener zunächst den Betrieb des Filterzusammenbaus 10' beenden. Sobald der Betrieb unterbrochen ist und sicher weiter vorgegangen werden kann, kann der Bediener den Filterzusammenbau 10' warten, indem er die Endlagensperrriegel 64 entriegelt und den Zugangsdeckel 62 öffnet, um die Module 50' und 52' offenzulegen. Wenn der Bediener feststellt, dass eine Reinigung der Filterkammer 18' oder der Module 50' und/oder 52' erforderlich ist, kann er das Einlassmodul 50' und das Auslassmodul 52' gemeinsam aus dem Filterzusammenbau 10' entnehmen. Sobald sie entnommen wurden, können das Einlassmodul 50' und das Auslassmodul 52' voneinander getrennt und beide können gereinigt werden. Der Bediener kann unterschiedliche Reinigungsverfahren anwenden, um Verunreinigungen zu entfernen, beispielsweise, indem er die Module 50', 52' abwischt, die Module 50' und/oder 52' schüttelt, oder die Module 50', 52' mit Druckluft sauber bläst. Der Bediener kann auch die Filterkammer 18' des Gehäuses 12' reinigt, während die Module 50 und 52' ausgebaut sind.

Sobald die Module 50', 52' und die Filterkammer 18' gereinigt sind, kann der Bediener die Module 50' und 52' wieder in den Filterzusammenbau 10' einführen. Zunächst führt der Bediener die Einlässe 38 der Auslassdurchlässe 26 der Auslassmodule 52' in die Auslässe 32 der zugehörigen Einlassdurchlässe 24 des Einlassmoduls 50' ein. Danach platziert der Bediener die Module 50' und 52' zusammen im Filterzusammenbau 10', wobei er die Module 50' und 52' durch die Halte- und Orientierungselemente 56' und 60' im Gehäuse 12' positioniert. Schließlich schließt der Bediener den Zugangsdeckel 62 und verriegelt die Endlagensperrriegel 64, da die Module 50' und 52' innerhalb des Gehäuses 12' arretiert werden. Sobald der Wiederzusammenbau beendet ist, kann der Bediener den Betrieb wieder aufnehmen. Es ist anzumerken, dass die Halte- und Orientierungselemente 56' und 60' dazu dienen, die richtige Ausrichtung zwischen den Einlassdurchlässen 24 des Einlassmoduls 50 und den zugehörigen Auslassdurchlässen 26 des Auslassmoduls 52 in Längsrichtung sicherzustellen.

## Patentansprüche

1. Filterzusammenbau (10, 10') des Wirbeltyps, mit einem Gehäuse (12, 12'), das einen Einlassbereich (14), eine Filterkammer (18, 18') stromab des Einlassbereichs (14) und einen Auslassbereich (16) stromab der Filterkammer (18, 18') aufweist, wobei sich im Gehäuse (12, 12') mindestens ein Einlassdurchlass (24), durch den ein Fluid aus dem Einlassbereich (14) strömt, in welchem Wirbel erzeugt werden und ein Auslassdurchlass (26) befinden, durch den das Fluid zum Auslassbereich (16) strömt, und wobei der Einlassdurchlass (24) mit dem Auslassdurchlass (26) zusammenwirkt, um Verunreinigungen aus dem Fluid zu filtern, **dadurch gekennzeichnet, dass** innerhalb des Gehäuses (12, 12') ein herausnehmbares Einlassmodul (50, 50') mit dem Einlassdurchlass (24) und ein herausnehmbares Auslassmodul (52, 52') mit dem Auslassdurchlass (26) angeordnet sind.

2. Filterzusammenbau (10) nach Anspruch 1, **dadurch gekennzeichnet, dass** das Einlassmodul (50) und das Auslassmodul (52) durch den Einlassbereich (14) des Gehäuses (12) herausnehmbar sind.

3. Filterzusammenbau (10) nach Anspruch 2, **dadurch gekennzeichnet, dass** das Einlassmodul (50) durch einen Flansch (66) am Gehäuse (12) festgehalten wird, der am Einlassbereich (14) des Gehäuses (12) lösbar angebracht ist.

4. Filterzusammenbau (10) nach Anspruch 3, **dadurch gekennzeichnet, dass** der Flansch (66) durch wenigstens einen Endlagensperrriegel (70) am Gehäuse (12) befestigt ist.

5. Filterzusammenbau (10') nach Anspruch 1, **dadurch gekennzeichnet, dass** das Einlassmodul (50') und das Auslassmodul (52') durch eine Öffnung des Gehäuses (12') aus dem Gehäuse (12') herausnehmbar sind, wobei die Öffnung durch einen Zugangsdeckel (62) verschließbar ist.

6. Filterzusammenbau (10') nach Anspruch 5, **dadurch gekennzeichnet, dass** das Einlassmodul (50') und das Auslassmodul (52') durch den Zugangsdeckel (62) innerhalb des Gehäuses (12') gehalten werden.

7. Filterzusammenbau (10') nach Anspruch 5 oder 6, **dadurch gekennzeichnet, dass** der Zugangsdeckel (62) durch wenigstens einen Endlagensperrriegel (64) am Gehäuse (12') befestigt ist.

8. Filterzusammenbau (10, 10') nach einem der Ansprüche 1 bis 7, **dadurch gekennzeichnet, dass** das Einlassmodul (50, 50') eine Platte (54, 54') aufweist, die den Einlassbereich (14) von der Filterkammer (18, 18') trennt, und das Auslassmodul (52, 52') eine Platte (58, 58') aufweist, die den Auslassbereich (16) von der Filterkammer (18, 18') trennt.

9. Filterzusammenbau (10, 10') nach einem der Ansprüche 1 bis 8, **dadurch gekennzeichnet, dass** das Einlassmodul (50, 50') eine Mehrzahl an Einlassdurchlässen (24) aufweist, und dass das Auslassmodul (52, 52') eine Vielzahl an Auslassdurchlässen (26) aufweist, die jeweils mit einem zugeordneten Einlassdurchlass (24) zusammenwirken, um Verunreinigungen aus dem Fluid herauszufiltern.

10. Filterzusammenbau (10, 10') nach einem der Ansprüche 1 bis 9, **dadurch gekennzeichnet, dass** das Fluid Luft ist.
